Europäisches Patentamt

European Patent Office

Office européen des brevets

(11) Veröffentlichungsnummer : **0 066 331**
**B1**

(12) **EUROPÄISCHE PATENTSCHRIFT**

(45) Veröffentlichungstag der Patentschrift :. 30.01.85

(51) Int. Cl.⁴ : **G 11 B 5/52, G 11 B 21/24**

(21) Anmeldenummer : **82200613.6**

(22) Anmeldetag : **18.05.82**

(54) **Trommelförmige Abtasteinrichtung.**

(30) Priorität : **25.05.81 AT 2345/81**

(43) Veröffentlichungstag der Anmeldung : **08.12.82 Patentblatt 82/49**

(45) Bekanntmachung des Hinweises auf die Patenterteilung : **30.01.85 Patentblatt 85/05**

(84) Benannte Vertragsstaaten : **AT DE FR GB IT**

(56) Entgegenhaltungen :
**DE-A- 2 543 854**
**DE-A- 2 903 197**
**FR-A- 2 212 593**
**US-A- 4 056 518**
**US-A- 4 117 522**

(73) Patentinhaber : **N.V. Philips' Gloeilampenfabrieken Groenewoudseweg 1 NL-5621 BA Eindhoven (NL)**

(72) Erfinder : **Hütter, Heinrich P/A INT. OCTROOIBUREAU B.V. Prof.Holstlaan 6 NL-5656 AA Eindhoven (NL)**

(74) Vertreter : **Van Weele, Paul Johannes Frits et al INTERNATIONAAL OCTROOIBUREAU B.V. Prof. Holstlaan 6 NL-5656 AA Eindhoven (NL)**

## Beschreibung

Die Erfindung bezieht sich auf eine trommelförmige Abtasteinrichtung für ein Aufzeichnungs- und/oder Wiedergabegerät für einen bandförmigen, magnetisierbaren Aufzeichnungsträger, der zumindest teilweise um die Mantelfläche der Abtasteinrichtung schlingbar ist, welche mindestens einen um eine Drehachse rotierend antreibbaren, einstückig ausgebildeten Kopfträger für mindestens einen zum Abtasten des um die Mantelfläche geschlungenen Aufzeichnungsträgers vorgesehenen, im wesentlichen symmetrisch zu einer Radiallinie durch die Drehachse angeordneten Magnetkopf aufweist, wobei der Kopfträger zur Anordnung an der Abtasteinrichtung einen plattenförmigen Basisteil und zum Halten des Magnetkopfes einen plattenförmigen Halteteil aufweist, der mit dem Basisteil über mindestens einen als deformierbare Schwachstelle vorgesehenen, streifenförmig ausgebildeten, im wesentlichen in der gleichen Richtung wie die Radiallinie verlaufenden Steg verbunden und gegenüber dem Basisteil durch Deformation des Steges verstellbar ist, wobei der Basisteil und der Halteteil mit ihren Plattenebenen im wesentlichen senkrecht zur Drehachse liegen und zum Verstellen des Halteteiles gegenüber dem Basisteil in Richtung der Drehachse an dem Halteteil eine sich an einem Gegenlager abstützende Einstelleinrichtung angreift.

Eine solche Abtasteinrichtung ist beispielsweise aus der US-PS 4 117 522 bekannt. Diese bekannte Abtasteinrichtung weist einen schreibenförmigen Kopfträger mit einem Basisteil und vier Halteteilen für je einen Magnetkopf sowie Stege auf, die den Basisteil und die Halteteile einstückig miteinander verbinden. Der Basisteil, die Stege und die Halteteile liegen dabei in einer Ebene, so dass für den Kopfträger ein relativ grosser Platzbedarf erforderlich ist. Dies ist aber ungünstig im Hinblick auf die Realisierung von Abtasteinrichtungen mit kleinem Durchmesser, wie dies für Geräte mit kleinen Abmessungen und hoher Speicherkapazität erforderlich ist. Bei dieser bekannten Abtasteinrichtung ist jeder Halteteil über drei streifenförmig ausgebildete Stege mit dem Basisteil einstückig verbunden. Einer der Stege verläuft in Richtung der Radiallinie, und jeder Halteteil ist über diesen Steg gegenüber dem Basisteil mit Hilfe von zwei Stellschrauben zum Justieren der Azimutlage des am Halteteil festgehaltenen Magnetkopfes verstellbar. Die beiden anderen Stege verlaugen senkrecht zur Richtung der betreffenden Radiallinie, und jeder Halteteil ist über diese beiden Stege gegenüber dem Basisteil mit Hilfe einer Stellschraube zum Justieren der Höhenlage in Richtung der Drehachse des am Halteteil festgehaltenen Magnetkopfes verstellbar. Dabei ist es aber wesentlich, dass der Normalabstand, zwischen dem Magnetkopf und den senkrecht zur Radiallinie verlaufenden Stegen möglichst gross ist, da nur dann gewährleistet ist, dass die bei der Justierung der Höhenlage des Magnetkopfes stattfindende Verstellbewegung des Halteiles die Neigungslage des Magnetkopfes, die bekanntlich so festgelegt sein soll, dass der Magnetkopf mit seiner gesamten Kopfspiegelfläche an einem von demselben abgetasteten Aufzeichnungsträger anliegt, nicht unzulässig verändert. Da bei dieser bekannten Abtasteinrichtung der Basisteil, die Stege und der Halteteil des Kopfträgers aber in einer Ebene liegen, sind der Dimensionierung des erwähnten Normalabstandes relativ enge Grenzen gesetzt.

Die Erfindung hat sich zur Aufgabe gestellt, eine einfache und preiswerte Lösung der vorstehend aufgezeigten Probleme anzugeben und eine trommelförmige Abtasteinrichtung der eingangs angeführten Art zu schaffen, die mit einem kleinen Durchmesser ausgebildet werden kann, die einen besonders einfachen Kopfträger aufweist und die insbesondere eine Höhenjustierung für den Magnetkopft in weiten Grenzen ermöglicht, ohne durch diese Justierung die Neigungslage des Magnetkopfes nachteilig zu verändern. Hierzu ist die Erfindung dadurch gekennzeichnet, dass der Steg um eine parallel zu den Plattenebenen vom Basisteil und Halteteil und im wesentlichen senkrecht zu der Radiallinie verlaufende Biegeachse U-förmig gebogen ausgebildet ist, wobei der Steg den Basisteil und den Halteteil an ihren von der Mantelfläche der Abtasteinrichtung abgewandten Enden miteinander verbindet und mit ihren Plattenebenen in Richtung der Drehachse übereinander liegend und federnd gegeneinander verspannt hält.

Durch die U-förmige Ausbildung des Steges ist erreicht, dass der Basisteil und der Halteteil des Kopfträgers in Richtung der Drehachse mit ihren Plattenebenen übereinander liegen, wodurch eine Reihe von Vorteilen hinsichtlich der Ausbildung und auch der Justierung erhalten werden. So ist eine Reduzierung der Abmessungen des Kopfträgers erreicht, wodurch es möglich ist, den Durchmesser der trommelförmigen Abtasteinrichtung insgesamt klein zu halten. Dadurch, dass der als Schwachstelle vorgesehene, U-förmig ausgebildete Steg den Basisteil und den Halteteil an ihren von der Mantelfläche der Abtasteinrichtung abgewandten Enden miteinander verbindet, ist ein grösstmöglicher Normalabstand zwischen dem Steg und dem am Halteteil angebrachten, im Bereich der Mantelfläche liegenden Magnetkopf erreich, so dass die Verstellbewegung des Magnetkopfes zu dessen Höhenjustierung in Richtung der Drehachse auf die Neigungslage des Magnetkopfes praktisch keinen Einfluss ausübt. Da der Steg den Basisteil und den Halteteil elastisch nachgiebig federnd gegeneinander verspannt hält, ist auf einfache Weise erreicht, dass der Halteteil durch entsprechende Betätigung der Einstelleinrichtung sowohl vom Basisteil weg als auch zu demselben hin verstellt werden kann, wobei auch eine mehrmalige Justierung in entegegengesetzten Richtungen durchgeführt werden kann. Bei einer solchen U-förmigen Ausbildung des Steges ist, falls dies erwünscht ist, auch eine einfache Azimuteinstellung für einen am Halteteil angebrachten Magnetkopft möglich, wenn eine Einstelleinrichtung vorgesehen ist, die asymmetrisch zur betreffenden Radiallinie am Halteteil angreift.

Für die am Halteteil angreifende Einstelleinrichtung kann ein separates auf dem Basisteil angebrachtes, beispeilsweise festgeschraubtes oder festgenietetes Gegenlager vorgesehen sein, auf dem die Einstelleinrichtung verstellbar angeordnet ist. Dies ist beispielsweise auch bei der bekannten Abtasteinrichtung der Fall, bei der an dem Basisteil ein sich mit seinem freien Ende bis zum Halteteil erstreckender Tragarm für Stellschrauben vorgesehen ist. Das Befestigen des separaten Gegenlagers am Basisteil stellt einen zusätzlichen Aufwand dar, wobei es durch das Befestigen desselben am Basisteil zu Verspannungen und Deformationen im Basisteil kommen kann, worunter die Genauigkeit, Formbeständigkeit und Masshaltigkeit des Kopfträgers leidet. Diesbezüglich hat sich daher als besonders vorteilhaft erwiesen, wenn der Basisteil unmittelbar das Gegenlager für die am Halteteil angreifende Einstelleinrichtung bildet. Dadurch, dass der U-förmig ausgebildete Steg den Basisteil und den Halteteil des Kopfträgers übereinander liegend hält, kann nämlich der Basisteil einfach zugleich als Gegenlager für die am Halteteil angreifende Einstelleinrichtung ausgenützt werden, so dass sich ein eigenes Gegenlager und dessen Montage am Basisteil erübrigt. Beispielsweise kann im Basisteil selbst eine Gewindebohrung vorgesehen sein, in die eine als Einstelleinrichtung dienende Stellschraube einschraubbar ist. Auch kann unmittelbar am Basisteil ein als Einstelleinrichtung vorgesehener Einstellkeil verschiebbar geführt sein.

Mit Hilfe der Einstelleinrichtung kann die Höhenlage des Magnetkopfes der Abtasteinrichtung in Richtung der Drehachse justiert werden, wie dies vorstehend angeführt ist. Um ein einwandfreies Aufzeichnen und/oder Wiedergeben mit dem Magnetkopf der Abtasteinrichtung zu erzielen, ist es aber zweckmässig, zusätzlich zur Justierung der Höhenlage des Magnetkopfes in Richtung der Drehachse auch eine Justierung von dessen Lage in mindestens einer senkrecht zur Drehachse verlaufenden Richtung vorzunehmen. Eine solche Justierung ist bei der bekannten Abtasteinrichtung aufgrund der Anordnung des Basisteiles, der Stege und des Halteteiles des Kopfträgers in einer Ebene nicht möglich. Bei der erfindungsgemässen Abtasteinrichtung hingegen ist durch die U-förmige Ausbildung des Steges dieser auch in einer senkrecht zur Drehachse verlaufenden Richtung deformierbar, so dass leicht eine Verstellung des Halteteiles gegenüber dem Basisteil in mindestens einer in seiner Plattenebene verlaufenden Richtung möglich ist. In diesem Zusammenhang hat sich daher als vorteilhaft erwiesen, wenn am Halteteil mindestens eine Angriffsfläche und am Basisteil mindestens eine Abstützfläche für mindestens eine weitere Einstelleinrichtung zum Verstellen des Halteteiles gegenüber dem Basisteil in mindestens einer in seiner Plattenebene verlaufenden Richtung vorgesehen ist. Auf diese Weise kann einfach und leicht zusätzlich zur Einstellung der Lage des Halteteiles gegenüber dem Basisteil in Richtung der Drehachse auch eine Einstellung der Lage des Halteteiles samt dem darauf angebrachten Magnetkopf in mindestens einer in seiner Plattenebene, also senkrecht zur Drehachse verlaufenden Richtung vorgenommen werden.

Dabei hat es sich als vorteilhaft erwiesen, wenn am Halteteil zwei im wesentlichen einander gegenüberliegende Angriffsflächen und am Basisteil zwei im wesentlichen einander gegenüberliegende Abstützflächen für mindestens eine weitere Einstelleinrichtung zum Verstellen des Halteteiles gegenüber dem Basisteil in den in seiner Plattenebene senkrecht zu der Radiallinie verlaufenden Richtungen vorgesehen sind. Hierdurch kann die Lage des am Halteteil angebrachten Magnetkopfes in Umfangsrichtung bezüglich der Mantelfläche der Abtasteinrichtung in zwei zueinander entgegengesetzten Richtungen einfach justiert werden. Dies ist insbesondere für eine Abtasteinrichtung mit mindestens zwei gleichmässig zueinander winkelversetzt angeordneten Magnetköpfen von Wichtigkeit, da dann in diesem Fall der gegenseitige Winkelabstand der Magnetköpfe in Umfangsrichtung, also die Umfangslage der Magnetköpfe exakt eingestellt werden kann, was für einen einwandfreien Aufzeichnungs- und/oder Wiedergabevorgang wichtig ist.

Ebenso hat es sich im Hinblick auf eine zusätzliche Justierung der Lage des Magnetkopfes der Abtasteinrichtung als vorteilhaft erwiesen, wenn am Halteteil zwei weitere im wesentlichen einander gegenüberliegende Angriffsflächen und am Basisteil zwei weitere im wesentlichen einander gegenüberliegende Abstützflächen für mindestens eine weitere Einstelleinrichtung zum Verstellen des Halteteiles gegenüber dem Basisteil in den in seiner Plattenebene sich mit der Radiallinie deckenden Richtungen vorgesehen sind. Hierdurch ist erreicht, dass die Lage des Magnetkopfes auch radial bezüglich der Mantelfläche der Abtasteinrichtung in zwei zueinander entgegengesetzten Richtungen einfach justiert werden kann. Dies ist deshalb wichtig, weil durch diese Einstellung der Radiallage des Magnetkopfes die Abstandsverhältnisse zwischen dem Magnetkopfes und dem vom diesem abgetasteten, zumindest teilweise um die Mantelfläche der Abtasteinrichung geschlungenen Aufzeichnungsträger auf einen optimalen Wert justierbar sind, was ebenfalls für einen einwandfreien Aufzeichnungs- und/oder Wiedergabevorgang wichtig ist.

Die Angriffsflächen am Halteteil und die Abstützflächen am Basisteil können durch abgewinkelte Lappen, eingeprägte Rinnen oder erhabene Rippen gebildet sein, an denen die jeweilige weitere Einstelleinrichtung, die beispielsweise durch Einstellschrauben oder Einstellkeile gebildet sein kann, angreift bzw. sich abstützt. Es hat sich aber als vorteilhaft erwiesen, wenn im Halteteil und im Basisteil je eine durchgehende Öffnung vorgesehen sind, die in Richtung der Drehachse im wesentlichen konzentrisch zueinander liegende Begrenzungswände aufweisen und in die in Richtung der Drehachse ein als weitere Einstelleinrichtung vorgesehenes stiftförmiges Verstellwerkzeug einführbar ist, welches zum Verstellen des Halteteiles gegenüber dem Basisteil in mindestens einer in seiner Plattenebene verlaufenden Richtung von Hand aus verschwenkbar ist, wobei beim Verschwenken das Verstellwerkzeug an einem als Angriffsfläche dienenden Wandabschnitt der Öffnung im Halteteil angreift und sich an einem als Abstützfläche dienenden Wandabschnitt der Öffnung im Basisteil abstützt. Hierdurch ist eine besonders einfache Ausbildung für die Angriffsflächen und Abstützflächen, aber auch für die weitere Einstelleinrichtung zum Justieren der Lage des Magnetkopfes erreicht. Die durchgehenden Öffnungen im Halteteil und Basisteil können beispielsweise einen quadratischen oder rechteckförmigen Querschnitt aufweisen, wobei sich dann Justierungen des Halteteiles in zwei in seiner Plattenebene senkrecht zueinander verlaufenden Richtungen anbieten. Sie können aber auch kreisförmig ausgebildet sein, wobei dann einfach Justierungen des Halteteiles in beliebigen in seiner Plattenebene verlaufenden Richtungen möglich sind. Die kreisförmig ausgebildeten Öffnungen im Basisteil und Halteteil können hierbei je den gleichen Durchmesser aufweisen, jedoch auch mit unterschied lich grossen Durchmessern ausgebildet sein.

Der den Halteteil mit dem Basisteil einstückig verbindende Steg kann beim Verstellen des Halteteiles gegenüber dem Basisteil in mindestens einer in seiner Plattenebene verlaufenden Richtung elastisch deformierbar ausgebildet sein, wobei dann der Halteteil nach seiner Verstellung in seiner justierten Lage zu fixieren ist, was beispielsweise mit Fixierschrauben oder durch Festkleben erfolgen kann. Als besonders vorteilhaft hat sich aber erwiesen, wenn der Steg beim Verstellen des Halteteiles gegenüber dem Basisteil in mindestens einer in seiner Plattenebene verlaufenden Richtung in seinem Verstellbereich plastisch deformierbar ausgebildet ist. Auf diese Weise ist erreicht, dass der Halteteil über den plastisch deformierten Steg seine justierte Lage beibehält, ohne dass hierfür eine separate Fixierung erforderlich ist. Die plastische Deformierbarkeit des Steges in seinem Verstellbereich, der in der Praxis relativ klein ist, wird durch eine entsprechende Wahl des Werkstoffes für den Steg und damit für den einstückigen Kopfträger erreicht. In diesem Zusammenhang hat sich beispielsweise die Verwendung von weichgeglühtem Messing als günstig erwiesen ; auch kann Stahl mit einer niedrigen Elastizitätsgrenze verwendet werden.

Der Basisteil und der Halteteil können über einen einzigen Steg miteinander verbunden sein, der bezüglich der Radiallinie symmetrisch, aber auch asymmetrisch angeordnet sein kann. Als besonders vorteilhaft hat es sich aber erwiesen, wenn zwei Stege vorgesehen sind, die in Richtung der Biegeachse in Abstand voneinander und symmetrisch zu der Radiallinie liegen. Hierdurch ist eine besonders stabile Verbindung von Halteteil und Basisteil gewährleistet, was im Hinblick auf eine sichere und einwandfreie Befestigung des Magnetkopfes an der Abtasteinrichtung vorteilhaft ist. Durch die symmetrische Anordnung der beiden Stege sind auch gleiche Kräfteverhältnisse bei gegensinnigen Verstellungen des Halteteiles gegenüber dem Basisteil erreicht.

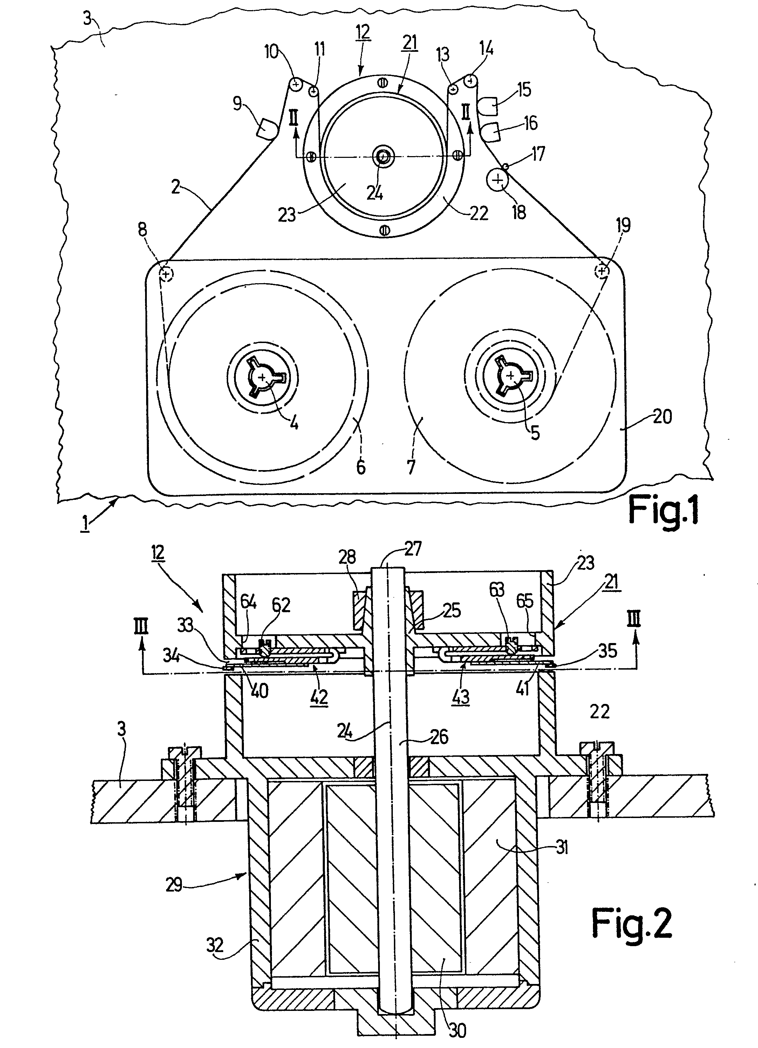

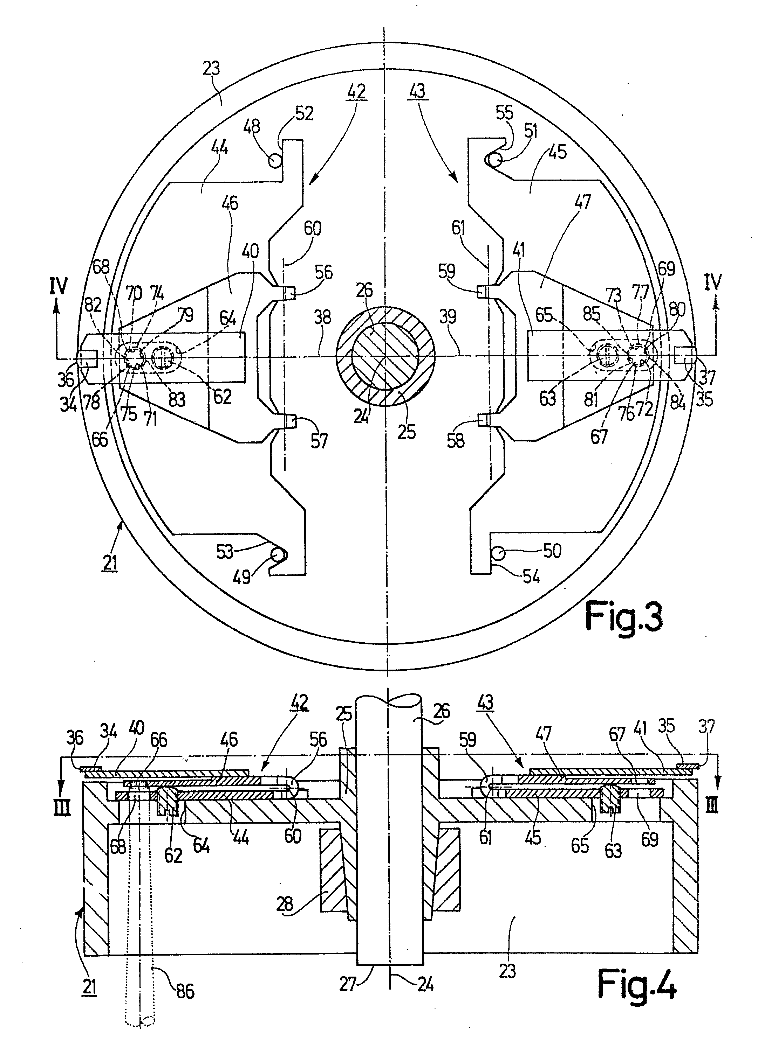

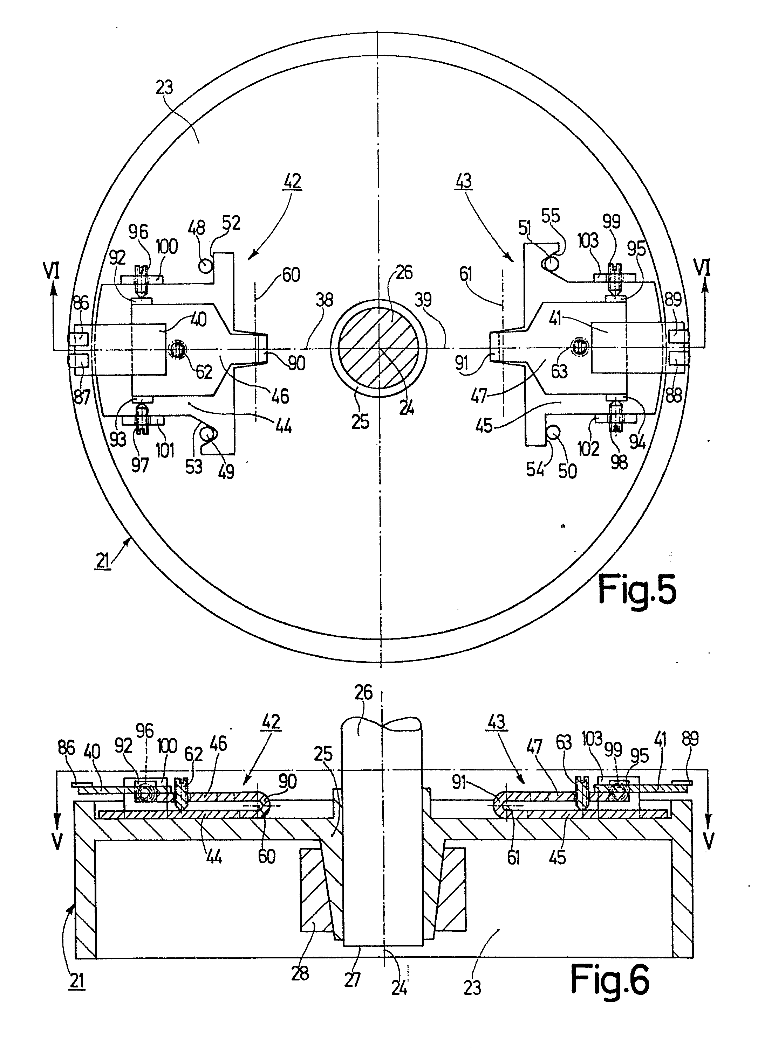

Die Erfindung wird im folgenden anhand von zwei in den Zeichnungen dargestellten Ausführungsbeispielen, auf welche die Erfindung jedoch nicht beschränkt sein soll, näher beschrieben. Es zeigt die Fig. 1 schematisch in Draufsicht einen Teil eines Aufzeichnungs- und/oder Wiedergabegerätes für einen in einer Kassette untergebrachten bandförmigen Aufzeichnungsträger, der teilweise um eine zweiteilige trommelförmige Abtasteinrichtung gemäss einem ersten Ausführungsbeispiel der Erfindung geschlungen ist. In Fig. 2 ist in einem Schnitt längs der Linie II-II in Fig. 1 die Abtasteinrichtung des Gerätes gemäss Fig. 1 dargestellt. Die Fig. 3 zeigt in einem Schnitt längs der Linie III-III in Fig. 2 den rotierend antreibbaren Teil der Abtasteinrichtung gemäss Fig. 2. Die Fig. 4 zeigt den rotierend antreibbaren Teil der Abtasteinrichtung gemäss Fig. 2 in einem Schnitt längs der Linie IV-IV in Fig. 3. In Fig. 5 ist analog wie in Fig. 3 der rotierend antreibbare Teil einer Abtasteinrichtung gemäss einem zweiten Ausführungsbeispiel der Erfindung dargestellt. Die Fig. 6 zeigt den rotierend antreibbaren Teil der Abtasteinrichtung gemäss Fig. 5 in einem Schnitt längs der Linie VI-VI in Fig. 5.

In Fig. 1 ist schematisch ein Teil eines Aufzeichnungs- und/oder Wiedergabegerätes 1 zum Aufzeichnen und/oder Wiedergeben von Bild- und Toninformationen auf einem magnetisierbaren, bandförmigen Aufzeichnungsträger 2, im folgenden kurz Band genannt, dargestellt. Das Gerät 1 weist eine Grundplatte 3 auf, die einen Abwickeldorn 4 und einen Aufwickeldorn 5 trägt, welche zum Antreiben einer Abwickelspule 6 bzw. einer Aufwickelspule 7 dienen, die auf den entsprechenden Wickeldorn 4 bzw. 5 aufgesetzt sind. In seinem Verlauf von der Abwickelspule 6 zu der Aufwickelspule 7 ist das Band 2 über eine stiftförmige Bandführung 8 zum Umlenken des Bandes, über einen Löschmagnetkopf 9 zum Löschen der gesamten auf dem Band gegebenenfalls gespeicherten Informationen, über zwei weitere stiftförmige Bandführungen 10 und 11 zum Umlenken des Bandes, über eine trommelförmige Abtasteinrichtung 12, die nachfolgend noch näher beschrieben ist, über zwei weitere stiftförmige Bandführungen 13 und 14 zum Umlenken des Bandes, über einen Löschmagnetkopf 15 zum Löschen von Toninformationen, über einen Aufzeichnungs- und/oder Wiedergabe-Magnetkopf 16 zum Aufzeichnen und/oder Wiedergeben von Toninformationen, über eine Antriebswelle 17, die im Zusammenwirken mit einer auf nicht näher dargestellte Weise an die Antriebswelle andrückbaren Andruckrolle 18 zur gleichförmigen Fortbewegung des Bandes bei einem Aufzeichnungs- und/oder Wiedergabevorgang dient, und über eine weitere stiftförmige Bandführung 19 zum Umlenken des Bandes 2 geführt. Die Abwickelspule 6 und die Aufwickelspule 7 sowie die beiden Bandführungen 8 und 19 sind in einer schematisch dargestellten Kassette 20 untergebracht, aus der das Band mit Hilfe einer zwischen zwei Betriebsstellungen verstellbaren Einrichtung, die beispielsweise die Bandführungen 10 und 11 und die Bandführungen 13 und 14 enthalten kann, aus der Kassette herausführbar und um die vorerwähnten Bauteile schlingbar ist, was hier nicht näher dargestellt ist, da dies für die Erfindung nicht wesentlich ist.

Wie bei derartigen Geräten vielfach üblich, ist das Band 2 schraubenlinienförmig in einem Winkelbereich von etwa 180° um die Mantelfläche 21 der trommelförmigen Abtast einrichtung 12 geschlungen, welche ebenso wie die Bandführungen 11 und 13 gegenüber der Grundplatte 3 geneigt angeordnet ist, was aber der Obersichtlichkeit halber in Fig. 1 nicht dargestellt ist. Mit dem um die Mantelfläche 21 der Abtasteinrichtung 12 schraubenlinienförmig geschlungenen Band 2 tritt mindestens ein an derselben angebrachter, rotierend antreibbarer Magnetkopf zum Aufzeichnen und/oder Wiedergeben von Bildinformationen in Wirkverbindung und tastet das Band entlang von schräg zur Längsrichtung desselben verlaufenden Informationsspuren ab.

Wie aus Fig. 2 ersichtlich ist, besteht beim vorliegenden Ausführungsbeispiel die trommelförmige Abtasteinrichtung 12 aus einer stillstehenden Trommelhälfte 22 und aus einer zu dieser koaxialen Trommelhälfte 23, die um eine Drehachse 24 rotierend antreibbar ist. Die rotierend antreibbare Trommelhälfte 23 weist eine Nabe 25 auf, mit der diese Trommelhälfte mit einer um die Drehachse 24 rotierend antreibbaren Welle 26 an deren freien Ende 27 kraftschlüssig verbunden ist. Die Nabe 25 weist hierzu einen hohlzylindrischen, sich zum freien Ende 27 der Welle 26 hin verjüngenden, hülsenförmigen Abschnitt auf, auf den ein Klemmring 28 selbsthemmend aufgeschoben ist, der zur kraftschlüssigen Verbindung der Trommelhälfte 23 mit der Welle 26 den hülsenförmigen Abschnitt der Nabe 25 an der Welle 26 klemmend festhält. Der Antrieb der Welle 26 und damit der Trommelhälfte 23 erfolgt in Form eines Direktantriebes, wobei ein schematisch dargestellter Motor 29 unmittelbar mit der Welle 26 zusammenwirkt, indem der Rotor 30 des Motors koaxial auf die Welle 26 aufgesetzt und mit derselben verbunden ist. Der Stator 31 des Motors 29 ist hierbei in einem Motorgehäuse 32 untergebracht, das mit der stillstehenden Trommelhälfte 22 zu einer Einheit zusammengefasst ist. Auf diese Weise bilden der Motor 29 und die gesamte trommelförmige Abtasteinrichtung 12 eine einfache, leicht montierbare Baueinheit. Zu erwähnen ist noch, dass in vorliegendem Fall die Mantelfläche 21 der Abtasteinrichtung 12 aus den beiden zylindrischen Umfangsflächen der beiden Trommelhälften 22 und 23 besteht, wobei die Mantelfläche 21 durch einen zwischen den beiden Trommelhälften 22 und 23 vorgesehenen Spalt 33 geteilt ist.

An der rotierend antreibbaren Trommelhälfte 23 der Abtasteinrichtung 12 sind zwei Magnetköpfe 34 und 35 angebracht, die mit ihren den Arbeitsspalt aufweisenden Kopfspiegelflächen 36 und 37 durch den zwischen den beiden Trommelhälften 22 und 23 vorgesehenen Spalt 33 hindurchragen, um mit dem um die Mantelfläche 21 geschlungenen Band 2 zusammenzuwirken. Wie aus den Figuren 3 und 4 deutlich zu ersehen ist, liegen die beiden Magnetköpfe auf demselben senkrecht zur Drehachse 24 verlaufenden Niveau und sind die beiden Magnetköpfe 34 und 35 in Umfangsrichtung der Trommelhälfte 23 gleichmässig zueinander versetzt angeordnet, so dass der Winkelabstand zwischen den beiden Magnetköpfen 180° beträgt. Jeder Magnetkopf 34 bzw. 35 ist symmetrisch zu einer Radiallinie 38 bzw. 39 durch die Drehachse 24 angeordnet und auf einem schematisch dargestellten, piezoelektrisch steuerbaren bimorphen Streifenelement 40 bzw. 41 festgeklebt, mit dem durch Zuführen von entsprechenden Steuersignalen der darauf angebrachte Magnetkopf in Richtung der Drehachse 24 aus einer Ruhelage zwischen zwei Extremlagen auslenkbar ist, um stets genau einer abzutastenden Informationsspur auf dem Band 2 nachzufolgen. Eine solche Massnahme ist bekannt und für die vorliegende Erfindung nicht wesentlich, so dass darauf nicht näher eingegangen wird.

Für die Befestigung jedes Magnetkopfes 34 bzw. 35 an der rotierend antreibbaren Trommelhälfte 23 weist die Abtasteinrichtung 12 einen einstückig ausgebildeten Kopfträger 42 bzw. 43 auf, der zur Anordnung an der Abtasteinrichtung 12 einen an der Trommelhälfte 23 festgeklebten plattenförmigen Basisteil 44 bzw. 45 zum Halten jedes Magnetkopfes 34 bzw. 35 einen plattenförmigen Halteteil 46 bzw. 47 aufweist, wobei die Basisteile und Halteteile mit ihren Plattenebenen im wesentlichen senkrecht zur Drehachse 24 liegen. Zur Positionierung jedes der beiden einstückig ausgebildeten Kopfträger 42 und 43 an der rotierend antreibbaren Trommelhälfte 23 sind an derselben je zwei Positionierstifte 48 und 49 bzw. 50 und 51 vorgesehen, die mit korrespondierenden Positionierflächen 52 und 53 bzw. 54 und 55 am Basisteil 44 bzw. 45 jedes Kopfträgers 42 bzw. 43 zusammenwirken. Die Positionierflächen 53 und 55 sind V-förmig und die Positionierflächen 52 und 54 sind plan ausgebildet, wodurch eine einwandfreie Positionierung jedes Kopfträgers 42 bzw. 43 an der Trommelhälfte 23 erreicht ist. Diese Positionierung ist so gewählt, dass jeder vom Kopfträger gehaltene Magnetkopf 34 bzw. 35 symmetrisch zu der Radiallinie 38 bzw. 39 durch die Drehachse 24 liegt, wie dies bereits vorstehend festgehalten ist. Jeder Magnetkopf 34 bzw. 35 ist dabei über das Streifenelement 40 bzw. 41 an dem Halteteil 46 bzw. 47 festgehalten, wobei das Streifenelement 40 bzw. 41 an dem Halteteil festgeklebt ist. Jeder Halteteil 46 bzw. 47 ist in vorliegendem Fall mit seinem Basisteil 44 bzw. 45 über zwei als deformierbare Schwachstellen vorgesehene, streifenförmig ausgebildete Stege 56 und 57 bzw. 58 und 59 einstückig verbunden.

Die Stege 56 und 57 bzw. 58 und 59 jedes Kopfträgers 42 bzw. 43 sind um eine parallel zu den Plattenebenen vom Basisteil 44 bzw. 45 und Halteteil 46 bzw. 47 und senkrecht zu der Radiallinie 38 bzw. 39 verlaufende, in den Figuren 3 und 4 schematisch mit strichpunktierten Linien dargestellte Biegeachse 60 bzw. 61 U-förmig gebogen ausgebildet. Die streifenförmigen Stege verlaufen parallel zueinander und in der gleichen Richtung wie die Radiallinie 38 bzw. 39 und liegen in Richtung der Biegeachse 60 bzw. 61 in Abstand voneinander und symmetrisch zu der Radiallinie 38 bzw. 39. Die Stege 56 und 57 bzw. 58 und 59 verbinden den Basisteil 44 bzw. 45 und den Halteteil 46 bzw. 47 jedes Kopfträgers 42 bzw. 43 an ihren von der Mantelfläche 21 der Abtasteinrichtung 12 abgewandten Enden einstückig miteinander und halten den Basisteil und den Halteteil jedes Kopfträgers mit ihren Plattenebenen in Richtung der Drehachse übereinander liegend und federnd gegeneinander verspannt, was durch entsprechendes Vorspannen der Stege beim Biegen derselben erreicht wird. Dadurch, dass Basisteil und Halteteil jedes Kopfträgers übereinander liegen, können die Kopfträger besonders kompakt ausgebildet werden, wodurch dieselben einen geringen Raumbedarf in Anspruch nehmen.

Durch Deformation der Stege 56 und 57 bzw. 58 und 59 ist jeder Halteteil 46 bzw. 47 gegenüber dem Basisteil 44 bzw. 45 verstellbar. Zum Verstellen des Halteteiles samt dem darauf festgehaltenen Magnetkopf 34 bzw. 35 gegenüber dem Basisteil in Richtung der Drehachse 24 greift an dem Halteteil 46 bzw. 47 eine als Einstelleinrichtung vorgesehene, sich an einem Gegenlager abstützende Stellschraube 62 bzw. 63 mit ihrem abgerundeten Ende an. Die Stellschraube 62 bzw. 63, die in Richtung der Drehachse 24 ausgerichtet ist und symmetrisch zur Radiallinie 38 bzw. 39 liegt, ist durch einen in der rotierend antreibbaren Trommelhälfte 23 vorgeschenen, durchgehenden, langlochförmigen Schlitz 64 bzw. 65 hindurch vom freien Ende 27 der Welle 26 der Abtasteinrichtung 12 her einstellbar. Das Gegenlager für die am Halteteil angreifende Stellschraube 62 bzw. 63 ist unmittelbar durch den Basisteil 44 bzw. 45 gebildet. Hierzu weist jeder Basisteil eine Gewindebohrung auf, in der die Stellschraube verschraubbar aufgenommen ist. Die Stellschraube ist zur feingängigen Verstellung des Halteteiles in Richtung der Drehachse 24 zweckmässigerweise mit einem Feingewinde ausgestattet, was neben der feingängigen Verstellbarkeit auch den Vorteil mit sich bringt, dass die Stellschraube unter der Wirkung des federnd an ihrem abgerundeten Ende angreifenden Halteteiles durch Selbsthemmung in der Gewindeborhung im Basisteil gegen unbeabsichtigtes Verdrehen gesichert ist.

Mit jeder Stellschraube 62 bzw. 63 kann durch Verdrehen derselben der mit ihr zusammenwirkende Halteteil 46 bzw. 47 samt dem darauf festgehaltenen Magnetkopf 34 bzw. 35 in Richtung der Drehachse 24 gegenüber dem Basisteil 44 bzw. 45 verstellt werden. Dabei werden bei der Verdrehung der Stellschraube 62 bzw. 63 die Stege 56 und 57 bzw. 58 und 59, die mit Vorspannung ausgebildet sind und dadurch den Basisteil und den Halteteil federnd gegeneinander verspannt halten, in Richtung der Drehachse elastisch nachgiebig deformiert, und zwar je nach Richtung der Verdrehung der Verstellschraube entweder aufgeweitet oder verengt. Die Stege 56 und 57 bzw. 58 und 59 bilden auf diese Weise praktisch ein Schwenklager, das im wesentlichen mit der Biegeachse 60 bzw. 61 übereinstimmt und über welches der Halteteil 46 bzw. 47 gegenüber dem Basisteil 44 bzw. 45 im wesentlichen in Richtung der Drehachse 24 verschwenkbar ist. Es kann also mit der Stellschraube der Halteteil in Richtung der Drehachse vom Basisteil weg verstellt werden, und bei entgegengesetztem Verdrehen der Stellschraube kann der Halteteil unter der federnden Wirkung der vorgespannten Stege zum Basisteil hin verstellt werden. Durch diese Verstellbewegungen des Halteteiles gegenüber dem Basisteil in Richtung der Drehachse kann die Höhenlage jedes Magnetkopfes 34 bzw. 35, der wie Fig. 3 zeigt in grösstmöglichem Abstand von dem durch die Stege gebildeten Schwenklager liegt, auf einfache Weise mit der Stellschraube justiert werden. Jeder Magnetkopf 34 bzw. 35 soll nämlich eine vorgegebene Ruhelage in Richtung der Drehachse gegenüber der rotierend antreibbaren Trommelhälfte 23 einnehmen, wenn dem piezoelektrischen Streifenelement 40 bzw. 41 kein Steuersignal zugeführt ist, um stets einen einwandfreien Aufzeichnungs- und/oder Wiedergabevorgang mit der Abtasteinrichtung 12 zu gewährleisten. Durch den grossen Abstand zwischen dem Magnetkopf 34 bzw. 35 und den Stegen 56 und 57 bzw. 58 und 59 des diesen Magnetkopf tragenden Kopfträgers 42 bzw. 43, welche Stege das Schwenklager für den Halteteil 46 bzw. 47 bei dessen Verstellung in Richtung der Drehachse bilden, ist erreicht, dass diese Verstellbewegung, die in der Praxis nur über höchstens einige zehntel Millimeter erfolgt, aufgrund des grossen Verstellradius keine Veränderung der Neigungslage des Magnetkopfes 34 bzw. 35 zur Folge hat, welche stets so sein soll, dass die Kopfspiegelfläche 36 bzw. 37 des Magnetkopfes zur Gänze am Band anliegt, wass dann der Fall ist, wenn der Magnetkopf 34 bzw. 35 im wesentlichen stets in einer senkrecht zur Drehachse verlaufenden Ebene liegt, wie dies in Fig. 4 dargestellt ist.

In der Praxis hat sich gezeigt, dass für einen einwandfreien Aufzeichnungs- und/oder Wiedergabevorgang die Justierung der Höhenlage der Magnetköpfe 34 und 35 in Richtung der Drehachse 24 der Abtasteinrichtung 12 häufig nicht ganz ausreichend ist und dass auch die Justierung der Lage des Magnetköpfes in der senkrecht zur Drehachse verlaufenden Ebene vorteilhaft ist. Aufgrund der U-förmigen Ausbildung der Stege 56 und 57 bzw. 58 und 59 sind dieselben auch leicht in einer senkrecht zur Drehachse verlaufenden Richtung deformierbar, so dass einfach mit geringem Kraftaufwand eine Verstellung des Halteteiles 46 bzw. 47 gegenüber dem Basisteil 44 bzw. 45 in mindestens einer in seiner Plattenebene verlaufenden Richtung möglich ist. Zu diesem Zweck ist, wie aus den Figuren 3 und 4 ersichtlich ist, im Halteteil 46 bzw. 47 und im Basisteil 44 bzw. 45 jedes Kopfträgers 42 bzw. 43 je eine kreisförmige, durch eine Bohrung gebildete, durchgehende Öffnung 66 bzw. 67 und 68 bzw. 69 vorgesehen, die in Richtung der Drehachse konzentrisch zueinander liegende Begrenzungswände aufweisen und symmetrisch zur Radiallinie 38 bzw. 39 liegen. Die in jedem Halteteil vorgesehene Öffnung 66 bzw. 67 weist einen kleineren Durchmesser auf als die hierzu konzentrische Öffnung 68 bzw. 69 im Basisteil. Jene beiden Wandabschnitte 70 und 71 bzw. 72 und 73 der Begrenzungswand der in jedem Halteteil 46 bzw. 47 vorgesehenen Öffnung 66 bzw. 67, deren Tangentialebenen parallel zu der Radiallinie 38 bzw. 39 verlaufen, bilden zwei einander gegenüberliegende Angriffsflächen und jene beiden Wandabschnitte 74 und 75 bzw. 76 und 77 der Begrenzungswand der in jedem Basisteil 44 bzw. 45 vorgesehenen Öffnung 68 bzw. 69, deren Tangentialebenen ebenfalls parallel zu der Radiallinie 38 bzw. 39 verlaufen, bilden zwei einander gegenüberliegende Abstützflächen für eine weitere Einstelleinrichtung zum Verstellen des Halteteiles 46 bzw. 47 gegenüber dem Basisteil 44 bzw. 45 in den in seiner Plattenebene senkrecht zu der Radiallinie 38 bzw. 39 verlaufenden Richtungen. Jene beiden Wandabschnitte 78 und 79 bzw. 80 und 81 der Begrenzungswand der in jedem Halteteil 46 bzw. 47 vorgesehenen Öffnung 66 bzw. 67, deren Tangentialebenen senkrecht zu der Radiallinie 38 bzw. 39 verlaufen, bilden zwei weitere einander gegenüberliegende Angriffsflächen und jene beiden Wandabschnitte 82 und 83 bzw. 84 und 85 der Begrenzungswand der in jedem Basisteil 44 bzw. 45 vorgesehenen Öffnung 68 bzw. 69, deren Tangentialebenen ebenfalls senkrecht zu der Radiallinie 38 bzw. 39 verlaufen, bilden zwei weitere einander gegenüberliegende Abstützflächen für eine weitere Einstelleinrichtung zum Verstellen des Halteteiles 46 bzw. 47 gegenüber dem Basisteil 44 bzw. 45 in den in seiner Plattenebene sich mit der Radiallinie 38 bzw. 39 deckenden Richtungen.

Als weitere Einstelleinrichtung zum Verstellen jedes Halteteiles 46 bzw. 47 gegenüber seinem Basisteil 44 bzw. 45 in mindestens einer in seiner Plattenebene verlaufenden Richtung dient in vorliegendem Fall ein stiftförmiges Verstellwerkzeug 86. Das Verstellwerkzeug ist vom freien Ende 27 der Welle 26 der Abtasteinrichtung 12 her in Richtung der Drehachse 24 in die Öffnungen 68 und 66 bzw. 69 und 67 einführbar, wie dies in Fig. 4 mit punktierten Linien angedeutet ist. Das Verstellwerkzeug 86 ist an seinem mit den Öffnungen zusammenwirkenden Ende entsprechend den unterschiedlichen Durchmessern der konzentrisch zueinander liegenden Öffnungen abgestuft ausgebildet. Beim Einführen des Verstellwerkzeuges in die Öffnungen 68 und 66 bzw. 69 und 67 stützt sich dasselbe mit seinem abgestuften, dickeren Teil an der dem Basisteil 44 bzw. 45 zugewandten Hauptfläche des Halteteiles 46 bzw. 47 ab, wodurch die Einführtiefe des Verstellwerkzeuges 86 in Richtung der Drehachse 24 begrenzt ist. Hierdurch ist erreicht, dass das Verstellwerkzeug nicht zu tief in die Öffnungen eingeführt werden kann, was eine Beschädigung des die Öffnungen 66 bzw. 67 im Halteteil 46 bzw. 47 überdeckenden Streifenelementes 40 bzw. 41 zur Folge haben könnte. Für den Fall, dass die Öffnungen 68 und 66 bzw. 69 und 67 alle gleich grossen Durchmesser aufweisen, kann das Verstellwerkzeug eine Abstufung aufweisen, mit der sich dasselbe an der vom Halteteil abgewandten Hauptfläche des Basisteiles abstützt, wodurch eine Begrenzung der Einführtiefe dieses Verstellwerkzeuges in Richtung der Drehachse 24 erzielt ist.

Zum Verstellen jedes Halteteiles 46 bzw. 47 gegenüber dem Basisteil 44 bzw. 45 in mindestens einer in seiner Plattenebene verlaufenden Richtung ist das Verstellwerkzeug 86 einfach von Hand aus entgegen dieser Richtung verschwenkbar. Bei einem solchen Verschwenken des Verstellwerkzeuges 86 greift dasselbe mit seinem abgestüften Ende an einem als Angriffsfläche dienenden Wandabschnitt der Öffnung 66 bzw. 67 im Halteteil 46 bzw. 47 an und stützt sich an einem als Abstützfläche dienenden Wandabschnitt der Öffnung 68 bzw. 69 im Basisteil 44 bzw. 45 ab. Durch Verschwenken des Verstellwerkzeuges 86 in den senkrecht zur Radiallinie 38 bzw. 39 verlaufenden Richtungen kann der Halteteil 46 bzw. 47 gegenüber dem Basisteil 44 bzw. 45 in den in seiner Plattenebene senkrecht zur Radiallinie verlaufenden Richtungen in entgegengesetztem Sinne verstellt werden, wobei dann die Lage des am Halteteil festgehaltenen Magnetkopfes 34 bzw. 35 in Umfangsrichtung der Mantelfläche 21 der Abtasteinrichtung 12 zur Justierung einstellbar ist. Bei einem solchen Justiervorgang greift das Verstellwerkzeug 86 je nach dessen Schwenkrichtung an einem der Wandabschnitte 70, 71 bzw. 72, 73 der Begrenzungswand der Öffnung 66 bzw. 67 im Halteteil 46 bzw. 47 an und stütz sich an einem der Wandabschnitte 74, 75 bzw. 76, 77 der Begrenzungswand der Öffnung 68 bzw. 69 im Basisteil 44 bzw. 45 ab. Hierbei ist durch die bezüglich der Radiallinie 38 bzw. 39 symmetrische Anordnung der Stege 56 und 57 bzw. 58 und 59 erreicht, dass für gegensinnige Justierverstellungen in entgegengesetzten Richtungen gleich grosse Kräfte notwendig sind, was sich aufgrund der symmetrischen Kräfteverhältnisse in diesem Fall ergibt. Durch Verschwenken des Verstellwerkzeuges 86 in den sich mit der Radiallinie 38 bzw. 39 deckenden Richtungen kann der Halteteil 46 bzw. 47 gegenüber dem Basisteil 44 bzw. 45 in den in seiner Plattenebene sich mit der Radiallinie deckenden Richtungen in entgegengesetztem Sinne verstellt werden, wobei dann die Lage des am Halteteil festgehaltenen Magnetkopfes 34 bzw. 35 in radialer Richtung bezüglich der Mantelfläche 21 der Abtasteinrichtung 12 zur Justierung einstellbar ist. Bei einem solchen Justiervorgang greift das Verstellwerkzeug 86 je nach dessen Schwenkrichtung an einem der Wandabschnitte 78, 79 bzw. 80, 81 der Begrenzungswand der Öffnung 66 bzw. 67 im Halteteil 46 bzw. 47 an und stützt sich an einem der Wandabschnitte 82, 83 bzw. 84, 85 der Begrenzungswand der Öffnung 68 bzw. 69 im Basisteil 44 bzw. 45 ab. Auch bei diesen Justiervorgängen liegen symmetrische Kraftverhältnisse aufgrund der symmetrischen Anordnung der Stege 56 und 57 bzw. 58 und 59 bezüglich der Radiallinie 38 bzw. 39 vor.

Auf vorstehend beschriebene Weise kann also sowohl die Umfangslage des Magnetkopfes 34 bzw. 35 in tangentialer Richtung bezüglich der Mantelfläche 21 der Abtasteinrichtung 12 als auch die Radiallage jedes Magnetkopfes in radialer Richtung bezüglich der Mantelfläche 21 justiert werden. Hierdurch ist auf besonders einfache Weise erreichbar, dass die Magnetköpfe genau um den gleichen Winkel zueinander versetzt angeordnet sind, also im vorliegenden Fall genau um 180°, und dass die Magnetköpfe in radialer Richtung mit ihren den Arbeitsspalt aufweisenden Kopfspiegelflächen 36 und 37 um genau den gleichen Betrag über die Mantelfläche 21 der Abtasteinrichtung 12 hervorragen, um einen gleichen und dabei auch optimalen Kontakt mit dem um die Mantelfläche 21 geschlungenen Band 2 zu erzielen. Durch diese beiden Justierungen in zueinander senkrechten Richtungen, die zusätzlich zur Justierung der Höhenlage durchführbar sind, wird ein einwandfreier Aufzeichnungs- und/oder Wiedergabevorgang mit den Magnetköpfen der Abtasteinrichtung erreicht.

Auch beim Verstellen jedes Halteteiles 46 bzw. 47 gegenüber dem Basisteil 44 bzw. 45 in mindestens einer in seiner Plattenebene verlaufenden Richtung werden die Stege 56 und 57 bzw. 58 und 59, die den Halteteil mit dem Basisteil einstückig verbinden, deformiert, jedoch in anderer Weise als beim Justieren der Höhenlage des Magnetkopfes 34 bzw. 35 in Richtung der Drehachse mit Hilfe der Stellschraube 62 bzw. 63. Die Stege 56 und 57 bzw. 58 und 59 sind in vorliegendem Fall beim Verstellen des Halteteiles gegenüber dem Basisteil in mindestens einer in seiner Plattenebene verlaufenden Richtung in ihrem Verstellbereich plastisch deformierbar ausgebildet. Die plastische Deformierbarkeit der Stege ist durch eine entsprechende Wahl des Werkstoffes für dieselben und daher für die einstückigen Kopfträger 42 und 43 erreicht. Beispielsweise hat sich hierfür die Verwendung von weichgeglühtem Messing, das eine besonders niedrige Elastizitätsgrenze aufweist, als zweckmässig erwiesen, aber auch Stahl mit einer niedrigen Elastizitätsgrenze kann verwendet werden. Durch die plastische Deformierbarkeit der Stege 56 und 57 bzw. 58 bzw. 59 jedes Kopfträgers 42 bzw. 43 in ihrem Verstellbereich beim Verstellen des Halteteiles 46 bzw. 47 gegenüber dem Basisteil 44 bzw. 45 in mindestens einer in seiner Plattenebene verlaufenden Richtung ist erreicht, dass nach einem solchen Justiervorgang die plastisch deformierten Stege den Halteteil 46 bzw. 47 selbsttätig in seiner justierten Lage halten, so dass keine separate Fixierung des Halteteiles in seiner justierten Lage erforderlich ist, wie dies auch aus den Figuren 3 und 4 hervorgeht.

Wie aus vorstehender Beschreibung ersichtlich ist, weist die Abtasteinrichtung zur Befestigung der Magnetköpfe einfach ausgebildete Kopfträger auf. Dadurch, dass die Stege U-förmig ausgebildet sind und der Halteteil und der Basisteil jedes Kopfträgers in Richtung der Drehachse übereinander liegen, können die Kopfträger kompakt ausgebildet werden, so dass der Raumbedarf gering ist. Hierdurch ist es möglich, eine Abtasteinrichtung mit kleinem Durchmesser zu realisieren, wie dies für kompakte Aufzeichnung- und/oder Wiedergabegeräte mit hoher Speicherkapazität notwendig ist. Die U-förmigen Stege der Kopfträger verbinden den Halteteil mit dem Basisteil an ihren von der Mantelfläche der Abtasteinrichtung abgewandten Enden, also in grösstmöglichem Abstand von dem am Halteteil festgehaltenen, im Bereich der Mantelfläche liegenden Magnetkopf. Hierdurch ist, da die Stege ein Schwenklager für den Halteteil samt dem darauf festgehaltenen Magnetkopf bei dessen Verstellung in Richtung der Drehachse zur Justierung der Höhenlage des Magnetkopfes bilden, ein möglichst grosser Verstellradius für den Magnetkopf erzielt, wodurch vorteilhafterweise erreicht ist, dass die Verstellbewegung des Magnetkopfes bei der Justierung seiner Höhenlage praktisch keinen Einfluss auf die Neigungslage des Magnetkopfes ausübt und daher dieselbe nicht verändert. Durch die übereinander liegende Anordnung von Halteteil und Basisteil kann der Basisteil jedes Kopfträger zugleich als Gegenlager für die als Stellschraube ausgebildete Einstelleinrichtung ausgenützt werden, was einfach ist, separate Gegenlager einspart und die durch das Befestigen von separaten Gegenlagern am Basisteil bedingten störenden Einflüsse ausschaltet. Durch das federnde Verspannen des Halteteiles gegenüber dem Basisteil mittels der vorgespannten Stege bleibt der Halteteil stets an der Stellschraube angelegt, und zwar unabhängig von der Verstellrichtung der Stellschraube, so dass auf diese Weise der Halteteil mit der Stellschraube in entgegengesetzten Richtungen einfach verstellbar ist. Dadurch, dass der Halteteil aufgrund der Vorspannung der Stege stets federnd an der Stellschraube anliegt, übt derselbe auf die Stellschraube ständig eine Kraft aus, welche bewirkt, dass die mit einem Feingewinde ausgestattete Stellschraube durch Reibungsschluss selbsthemmend in der Gewindebohrung im Basisteil gegen unbeabsichtigtes Verdrehen gesichert ist, wodurch sich eine separate Absicherung der Stellschraube erübrigt. Durch die U-förmige Ausbildung der Stege können dieselben auch bei einer Verstellung des Halteteiles gegenüber dem Basisteil in mindestens einer in seiner Plattenebene verlaufenden Richtung leicht mit relativ geringem Kraftaufwand deformiert werden, wodurch eine einfache und genaue Justierung der Lage des Magnetkopfes ermöglicht wird. Durch die symmetrische Anordnung der Stege jedes Kopfträgers bezüglich der zugeordneten Radiallinie sind für gegensinnige Justierverstellungen beim Justieren der Lage des Magnetkopfes gleiche Kräfteverhältnisse geschaffen. Die Angriffsflächen und Abstützflächen am Halteteil bzw. Basisteil durch Wandabschnitte der Begrenzungswände von als einfache Bohrungen ausgebildeten Öffnungen zu realisieren, ist als besonders einfach zu beurteilen. Dabei wird vorteilhafterweise auch mit einem besonders einfachen Verstellwerkzeug das Auslangen gefunden. Sowohl das Verstellwerkzeug zum Justieren der Lage des Magnetkopfes in einer senkrecht zur Drehachse verlaufenden Richtung als auch die Stellschraube zum Justieren der Höhenlage des Magnetkopfes in Richtung der Drehachse sind von dem freien Ende der Welle der Abtasteinrichtung her betätigbar, wodurch vorteilhafterweise erreicht ist, dass diese Justiervorgange auch im montierten Zustand der rotierend antreibbaren Trommelhälfte, also bei fertig montierter Abtasteinrichtung durchführbar sind. Die plastische Deformierbarkeit der Stege bei einer Verstellung des Halteteiles gegenüber dem Basisteil in einer in seiner Plattenebene verlaufenden Richtung bietet den Vorteil, dass der Halteteil ohne eine separate Fixierung in seiner justierten Lage durch die Stege selbst gehalten ist.

Die Figuren 5 und 6 zeigen eine rotierend antreibbare Trommelhälfte 23, die auch wieder zwei Kopfträger 42 und 43 aufweist, an denen aber je zwei Magnetköpfe 86 und 87 bzw. 88 und 89 angebracht sind, von welchen beispielsweise einer zum Aufzeichnen und der andere zum Wiedergeben von Bildsignalen dient. Die beiden Kopfträger sind in gleicher Weise wie beim zuvor beschriebenen Ausführungsbeispiel an der Trommelhälfte 23 mit Hilfe von Positionierstiften 48 und 49 bzw. 50 und 51 und Positionnierflächen 52 und 53 bzw. 54 und 55 positioniert. Die Positionierung ist dabei so gewählt, dass die beiden Magnetköpfe 86 und 87 bzw. 88 und 89 an jedem Kopfträger im wesentlichen symmetrisch zu der Radiallinie 38 bzw. 39 liegen, wobei die Magnetköpfe wiederum auf piezoelektrisch verstellbaren Streifenelementen 40 und 41 aufgeklebt sind. Jedes Streifenelement 40 bzw. 41 ist seinerseits je auf dem Halteteil 46 bzw. 47 des Kopfträgers 42 bzw. 43 festgeklebt, dessen Basisteil 44 bzw. 45 über eine Klebeverbindung mit der rotierend antreibbaren Trommelhälfte 23 verbunden ist.

Der Basisteil 44 bzw. 45 jedes Kopfträgers ist mit seinem Halteteil 46 bzw. 47 über einen einzigen als deformierbare Schwachstelle vorgesehenen, streifenförmig ausgebildeten Steg 90 bzw. 91 einstückig verbunden, der symmetrisch zu der Radiallinie 38 bzw. 39 liegt und in diesem Fall auch bei einer Verstellung des Halteteiles gegenüber dem Basisteil in einer in seiner Plattenebene verlaufenden Richtung elastisch deformierbar ausgebildet ist. Jeder Steg 90 bzw. 91 ist um eine parallel zu den Plattenebenen vom Basisteil 44 bzw. 45 und Halteteil 46 bzw. 47 und im wesentlichen senkrecht zu der Radiallinie 38 bzw. 39 verlaufende Biegeachse 60 bzw. 61 U-förmig gebogen ausgebildet und verläuft im wesentlichen in der gleichen Richtung wie die Radiallinie 38 bzw. 39. Jeder Steg 90 bzw. 91 verbindet dabei den Basisteil und den Halteteil jedes Kopfträgers 42 bzw. 43 an ihren von der Mantelfläche 21 der Abtasteinrichtung 12 abgewandten Enden miteinander und hält den Basisteil und den Halteteil mit ihren Plattenebenen in Richtung der Drehachse 24 übereinander liegend und federnd gegeneinander verspannt.

Zur Verstellung des Halteteiles gegenüber dem Basisteil in Richtung der Drehachse, um die Höhenlage der am Halteteil festgehaltenen Magnetköpfe 86 und 87 bzw. 88 und 89 zu justieren, ist eine in Richtung der Drehachse 24 verlaufende, symmetrisch zur Radiallinie 38 bzw. 39 liegende Stellschraube 62 bzw. 63 vorgesehen, die sich an dem als Gegenlager dienenden Basisteil 44 bzw. 45 mit ihrem verjüngten Ende abstützt und die an dem Halteteil 46 bzw. 47 über eine in demselben vorgesehene Gewindebohrung, in der die Stellschraube verschraubbar aufgenommen ist, angreift. Die Stellschrauben 62 und 63 sind dabei von jener Seite der rotierend antreibbaren Trommelhälfte 23 her betätigbar, von der her auch die Befestigung der Kopfträger 42 und 43 an der Trommelhälfte 23 erfolgt. Selbstverständlich kann neben jeder der beiden Stellschrauben 62 und 63 noch je eine weitere in Richtung der Drehachse 24 verlaufende, jedoch asymmetrisch zur betreffenden Radiallinie 38 bzw. 39 angeordnete Stellschraube vorgesehen sein, mit der dann einfach eine Justierung der Azimutlage des betreffenden Magnetkopfes möglich ist.

Am Halteteil 46 bzw. 47 jedes Kopfträgers 42 bzw. 43 sind zwei symmetrisch zur Radiallinie 38 bzw. 39 angeordnete, einander gegenüberliegende Angriffsflächen, die je durch einen vom Halteteil 46 bzw. 47 rechtwinkelig abgewinkelten Lappen 92 und 93 bzw. 94 und 95 gebildet sind, für je eine weitere Einstelleinrichtung 96 und 93 bzw. 98 und 99 zum Verstellen Halteteiles 46 bzw.

47 gegenüber dem Basisteil 44 bzw. 45 in den in seiner Plattenebene senkrecht zu der Radiallinie 38 bzw. 39 verlaufenden Richtungen vorgesehen. Jede der weiteren Einstelleinrichtungen 96, 97, 98 und 99 ist hierbei durch eine weitere Stellschraube gebildet, die sich an einer am Basisteil 44 bzw. 45 vorgesehenen Abstützfläche abstützt. Die Abstützflächen am Basisteil jedes Kopfträgers 42 bzw. 43 sind je durch einen vom Basisteil rechtwinkelig abgewinkelten Lappen 100 und 101 bzw. 102 und 103 gebildet, worin eine Gewindebohrung zur Aufnahme der weiteren Stellschraube vorgesehen ist. Die weiteren Stellschrauben 96 und 97 bzw. 98 und 99 sind ebenfalls von der gleichen Seite der rotierend antreibbaren Trommelhälfte 23 her betätigbar wie die Stellschrauben 62 und 63 zur Justierung der Höhenlage der Magnetköpfe und dienen zum Justieren der Umfangslage der Magnetköpfe.

Eine Justierung der Lage der Magnetköpfe 86 und 87 bzw. 88 und 89 in Umfangsrichtung der Mantelfläche 21 der Abtasteinrichtung 12 kann durch entsprechende Verstellung der weiteren Stellschrauben 96 und 97 bzw. 98 und 99 erfolgen. Dies kann so geschehen, dass die beiden an einem Halteteil 46 bzw. 47 angreifenden weiteren Stellschrauben 96 und 97 bzw. 98 und 99 zuerst von den die Angriffsflächen bildenden Lappen 92 und 93 bzw. 94 und 96 abgehoben werden, wonach je nach gewünschter Justierverstellung mit einer der beiden an einem Halteteil angreifenden weiteren Stellschrauben durch Verstellung des mit derselben zusammenwirkenden Lappens am Halteteil die erforderliche Verstellung des Halteteiles gegenüber dem Basisteil vorgenommen wird. Nach erfolgter Justierung, wobei der Steg 90 bzw. 91 elastisch deformiert wird, wird die andere der beiden an einem Halteteil angreifenden weiteren Stellschrauben an dem mit dieser zusammenwirkenden Lappen am Halteteil zur Anlage gebracht, wodurch dann der Halteteil in seiner justierten Lage über seine beiden als Angriffsflächen dienenden Lappen von den beiden weiteren Stellschrauben festgehalten ist. Die weiteren Stellschrauben können nach dem Justieren beispielsweise durch Festkleben gegen unbeabsichtigtes Verdrehen gesichert werden.

Wie aus vorstehendem ersichtlich ist, sind auch die Kopfträger dieser Abtasteinrichtung einfach ausgebildet, wobei aufgrund der U-förmigen Ausbildung der Stege der Basisteil und der Halteteil in Richtung der Drehachse übereinander liegen, wodurch die Kopfträger besonders kompakt ausgebildet sind. Dabei ist trotz dieser Kompaktheit ein grosser Schwenkradius, der durch den Abstand zwischen den Magnetköpfen auf einem Kopfträger und dessen Steg festgelegt ist, erhalten, was den Vorteil bietet, dass die Justierung der Höhenlage praktisch keinen Einfluss auf die Neigungslage der Magnetköpfe ausübt. Auch hier ist wieder das Gegenlager für die Stellschraube zur Höhenjustierung durch den Basisteil selbst gebildet. Zur Verstellung des Halteteiles gegenüber dem Basisteil, um die Lage der Magnetköpfe in Umfangsrichtung zu justieren, zwei gegensinnig auf den Halteteil einwirkende weitere Stellschrauben vorzusehen, bringt den Vorteil, dass dieselben zugleich zum Fixieren des Halteteiles in seiner justierten Lage verwendbar sind und den Halteteil absolut sicher festhalten, wodurch ein unbeabsichtigtes Verstellen des Halteteiles aus seiner justierten Lage praktisch ausgeschlossen ist. Da in diesem Fall der Steg auch bei der Verstellung des Halteteiles gegenüber dem Basisteil in einer in seiner Plattenebene verlaufenden Richtung elastisch deformierbar ausgebildet ist, braucht an den Werkstoff für die Kopfträger keine besonderen Anforderungen hinsichtlich einer niedrigen Elastizitätsgrenze gestellt werden, so dass auch besonders billige Werkstoffe verwendbar sind. Durch die symmetrische Anordnung des Steges bezüglich der Radiallinie sind wieder gleiche Kräfteverhältnisse für gegensinnige Justiervorgänge erhalten.

Selbstverständlich gibt es neben den beiden im Detail erläuterten Ausführungsbeispielen noch eine Reihe von möglichen Ausführungen, ohne den Rahmen der Erfindung zu verlassen. Sokann der Basisteil und der Halteteil eines Kopfträgers gegebenenfalls auch über drei U-förmig ausgebildete Stege einstückig miteinander verbunden sein. In den beiden Ausführungsbeispielen sind die Stege in Richtung der Drehachse betrachtet in ihrem Biegebereich schmäler ausgebildet als in ihren mit den Basisteilen bzw. Halteteilen verbundenen Bereichen ; selbstverständlich können die Stege aber auch gleichmässig breit ausgebildet sein. Eine als Einstellschraube zur Verstellung des Halteteiles in Richtung der Drehachse kann auch geneigt zu dieser verlaufend angeordnet sein, wenn dies aus anderen konstruktiven Gründen günstig bzw. erforderlich ist. Diese Stellschraube kann auch asymmetrisch zu einer Radiallinie liegen, was auch für die Öffnungen im Halteteil und Basisteil gilt, deren Begrenzungswandabschnitte die Angriffsflächen bzw. Abstützflächen bilden. Die Angriffsflächen und Abstützflächen können auch geneigt zu einer Radiallinie verlaufend angeordnet sein, wobei dann beispielsweise die Justierung der Lage des Halteteiles gegenüber dem Basisteil in Umfangsrichtung und in radialer Richtung mit einen einzigen Justiervorgang einstellbar ist. Anstelle von Stellschrauben können auch Einstellkeile zum Justieren verwendet werden. Selbstverständlich kann jeder Magnetkopf auch unmittelbar am Halteteil angebracht sein, wenn kein piezoelektrisch verstellbares Streifenelement vorgesehen ist. Auch können an einem rotierend antreibbaren Trommelteil auch mehr als zwei Kopfträger für eine entsprechende Anzahl von Magnetköpfen vorgesehen sein. Auch kann ein Kopfträger aus einem Basisteil und zwei oder mehr Halteteilen bestehen, die je über mindestens einen Steg mit dem Basisteil einstückig verbunden sind und je mindestens einen Magnekopf halten. Auch ist es möglich, dass der Basisteil des Kopfträgers durch die rotierend antreibbare Trommelhälfte selbst gebildet ist. Selbstverständlich kann die Abtasteinrichtung auch zwei stillstehende Trommelhälften aufweisen, die einen kreisförmigen Spalt zwischen sich einschliessen, durch den hindurch ein auf einem rotierend antreibbaren Arm mit Hilfe eines Kopfträgers angebrachter Magnetkopf mit dem um die Mantelfläche der beiden stillstehenden Trommelhälften geschlungenen Aufzeichnungsträger zusammwirkt. Die Abtasteinrichtung braucht auch keine kreiszylindrische Mantelfläche aufzuweisen : diese kann auch elliptisch ausgebildet sein, wobei dann die Drehachse des rotierend antreibbaren Kopfträgers mit der Achse der Abtasteinrichtung nicht mehr übereinstimmt.

**Ansprüche**

1. Trommelförmige Abtasteinrichtung für ein Aufzeichnungs- und/oder Wiedergabegerät für einen bandförmigen, magnetisierbaren Aufzeichnungsträger, der zumindest teilweise um die Mantelfläche der Abtasteinrichtung schlingbar ist, welche mindestens einen um die Drehachse rotierend antreibbaren, einstückig ausgebildeten Kopfträger für mindestens einen zum Abtasten des um die Mantelfläche geschlungenen Aufzeichnungsträgers vorgesehenen, im wesentlichen symmetrisch zu einer Radiallinie durch die Drehachse angeordneten Magnetkopf aufweist, wobei der Kopfträger zur Anordnung an der Abtasteinrichtung einen plattenförmigen Basisteil und zum Halten des Magnetkopfes einen plattenförmigen Halteteil aufweist, der mit dem Basisteil über mindestens einen als deformierbare Schwachstelle vorgesehen, streifenförmig ausgebildeten, im wesentlichen in der gleichen Richtung wie die Radiallinie verlaufenden Steg verbunden und gegenüber dem Basisteil durch Deformation des Steges verstellbar ist, wobei der Basisteil und der Halteteil mit ihren Plattenebenen im wesentlichen senkrecht zur Drehachse liegen und zum Verstellen des Halteteiles gegenüber dem Basisteil in Richtung der Drehachse an dem Halteteil eine sich an einem Gegenlager abstützende Einstelleinrichtung angreift, dadurch gekennzeichnet, dass der Steg um eine parallel zu den Plattenebenen vom Basisteil und Halteteil und im wesentlichen senkrecht zu der Radiallinie verlaufende Biegeachse U-förmig gebogen ausgebildet ist, wobei der Steg den Basisteil und den Halteteil an ihren von der Mantelfläche der Abtasteinrichtung abgewandten Enden miteinander verbindet und mit ihren Plattenebenen in Richtung der Drehachse übereinander liegend und federnd gegeneinander verspannt hält.

2. Abtasteinrichtung nach Anspruch 1, dadurch gekennzeichnet, dass der Basisteil unmittelbar das Gegenlager für die am Halteteil angreifende Einstelleinrichtung bildet.

3. Abtasteinrichtung nach Anspruch 1 oder 2, dadurch gekennzeichnet, dass am Halteteil mindestens eine Angriffsfläche und am Basisteil mindestens eine Abstützfläche für mindestens eine weitere Einstelleinrichtung zum Verstellen des Halteteiles gegenüber dem Basisteil in mindestens einer in seiner Plattenebene verlaufenden Richtung vorgesehen ist.

4. Abtasteinrichtung nach Anspruch 3, dadurch gekennzeichnet, dass am Halteteil zwei im wesentlichen einander gegenüberliegende Angriffsflächen und am Basisteil zwei im wesentlichen einander gegenüberliegende Abstützflächen für mindestens eine weitere Einstelleinrichtung zum Verstellen des Halteteiles gegenüber dem Basisteil in den in seiner Plattenebene senkrecht zu der Radiallinie verlaufenden Richtungen vorgesehen sind.

5. Abtasteinrichtung nach Anspruch 3, dadurch gekennzeichnet, dass am Halteteil zwei weitere im wesentlichen einander gegenüberliegende Angriffsflächen und am Basisteil zwei weitere im wesentlichen einander gegenüber liegende Abstützflächen für mindestens eine weitere Einstelleinrichtung zum Verstellen des Halteteiles gegenüber dem Basisteil in den in seiner Plattenebene sich mit der Radiallinie deckenden Richtungen vorgesehen sind.

6. Abtasteinrichtung nach einem der Ansprüche 3 bis 5, dadurch gekennzeichnet, dass im Halteteil und im Basisteil je eine durchgehende Offnung vorgesehen sind, die in Richtung der Drehachse im wesentlichen konzentrisch zueinander liegende Begrenzungswände aufweisen und in die in Richtung der Drehachse ein als weitere Einstelleinrichtung vorgesehenes stiftförmiges Verstellwerkzeug einführbar ist, welches zum Verstellen des Halteteiles gegenüber dem Basisteil in mindestens einer in seiner Plattenebene verlaufenden Richtung von Hand aus verschwenkbar ist, wobei beim Verschwenken des Verstellwerkzeug an einem als Angriffsfläche dienenden Wandabschnitt der Offnung im Halteteil angreift und sich an einem als Abstützfläche dienenden Wandabschnitt der Öffnung im Basisteil abstützt.

7. Abtasteinrichtung nach einem der Ansprüche 3 bis 6, dadurch gekennzeichnet, dass der Steg beim Verstellen des Halteteiles gegenüber dem Basisteil in mindestens einer in seiner Plattenebene verlaufenden Richtung in seinem Verstellbereich plastisch deformierbar ausgebildet ist.

8. Abtasteinrichtung nach einem der Ansprüche 1 bis 7, dadurch gekennzeichnet, dass zwei Stege vorgesehen sind, die in Richtung der Biegeachse in Abstand voneinander und symmetrisch zu der Radiallinie liegen.

**Claims**

1. A drum-shaped scanning device for a recording and/or reproducing apparatus for a magnetizable record carrier in the form of a tape, which record carrier can be wrapped at least partly around the circumferential surface of the scanning device, which device comprises at least one rotatable one-piece head mount for at least one magnetic head for scanning the record carrier wrapped around the circumferential surface, said at least one head being arranged substantially symmetrically relative to a radial line through the axis of rotation of the head mount, which head mount comprises a planar mounting portion for mounting on the scanning device and a planar carrier portion for carrying the magnetic head, which carrier portion is connected to the mounting portion by at least one strip-shaped connecting member which functions as an integral hinge, which extends substantially in the same direction as said radial line and which is deformable for adjustment of the carrier portion relative to the mounting portion, the planes of the mounting portion and the carrier portion extending substantially perpendicularly to the axis of rotation, and an adjusting device, which bears against an abutment, acting on the carrier portion for adjusting the carrier portion relative to the mounting portion in the axial direction, characterized in that the connecting member is bent into a U-shape about a bending axis which extends parallel to the planes of the mounting portion and the carrier portion and substantially perpendicularly to said radial line, said connecting member interconnecting the mounting portion and the carrier portion at their edges which are remote from the circumferential surface of the scanning device and keeping them resiliently biassed relative to each other with their major surface situated above one another in the axial direction.

2. A scanning device as claimed in Claim 1, characterized in that the mounting portion directly constitutes the abutment for the adjusting device which acts on the carrier portion.

3. A scanning device as claimed in Claim 1 or 2, characterized in that the carrier portion comprises at least one contact surface and the mounting portion comprises at least one abutment surface for at least one further adjusting device for adjusting the carrier portion relative to the mounting portion in at least one direction within the plane of the carrier portion.

4. A scanning device as claimed in Claim 3, characterized in that the carrier portion comprises two substantially opposed contact surfaces, and the mounting portion comprises two substantially opposed abutment surfaces, for at least one further adjusting device for adjusting the carrier portion relative to the mounting portion in directions within the plane of the carrier portion and perpendicular to said radial line.

5. A scanning device as claimed in claim 3, characterized in that the carrier portion comprises two further substantially opposed contact surfaces, and the mounting portion comprises two further substantially opposed abutment surfaces, for at least one further adjusting device for adjusting the carrier portion relative to the mounting portion in directions within the plane of the carrier portion which coincide with said radial line.

6. A scanning device as claimed in any of the claims 3 to 5, characterized in that the carrier portion and the mounting portion are each formed with a hole, which holes aligned with each other in the axial direction and into which holes in the axial direction a pin-shaped adjustment tool can be inserted, which tool serves as a further adjusting device and, for adjusting the carrier portion relative to the mounting portion in at least one direction within the plane of the carrier portion, is manually pivotable, the adjustment tool, as it is pivoted, acting on a contact surface formed by a portion of the bounding wall of the hole in the carrier portion while bearing against an abutment surface formed by a portion of the bounding wall of the hole in the mounting portion.

7. A scanning device as claimed in any of the Claims 3 to 6, characterized in that the connecting member is plastically deformable within the adjustment range for adjusting the carrier portion relative to the mounting portion in at least one direction within the plane of the carrier portion.

8. A scanning device as claimed in any of the Claims 1 to 7, characterized in that two connecting members are provided which are spaced from each other along the bending axis and which are disposed symmetrically on opposite sides of said radial line.

**Revendications**

1. Dispositif d'exploration en forme de tambour destiné à un appareil d'enregistrement et/ou de lecture d'un support d'information aimantable en forme de bande pouvant être bouclé au moins partiellement sur la surface latérale du dispositif d'exploration qui présente au moins un porte-têtes d'une seule pièce pouvant être animé d'un mouvement de rotation autour de l'axe de rotation et destiné à supporter au moins une tête magnétique servant à explorer le support d'information bouclé sur la surface latérale et disposée sensiblement symétriquement par rapport à une ligne radiale traversant l'axe de rotation, porte-têtes qui présente une partie de base plate pour son montage sur le dispositif d'exploration ainsi qu'une partie de retenue plate pour la retenue de la tête magnétique, partie de retenue qui, d'une part, est réunie à la partie de base par l'intermédiaire d'au moins un organe de liaison en forme de bande servant de partie mince déformable et s'étendant sensiblement dans le même sens que la ligne radiale et qui, d'autre part, est réglable par rapport à la partie de base par déformation de l'organe de liaison, alors que les plans de la partie de base et de la partie de retenue sont sensiblement perpendiculaires à l'axe de rotation et que, pour le réglage de la partie de retenue par rapport à la partie de base dans le sens de l'axe de rotation, un dispositif de réglage prenant appui contre une butée agit sur la partie de retenue, caractérisé en ce que l'organe de liaison est plié en U autour d'un axe de pliage parallèle aux plans

· de la partie de base et de la partie de retenue et sensiblement perpendiculaire à ladite ligne radiale, organe de liaison qui réunit la partie de base et la partie de retenue à leurs extrémités situées à l'opposé de la surface latérale du dispositif d'exploration et qui maintient leurs surfaces principales superposées et élastiquement prétendues l'une par rapport à l'autre dans le sens de l'axe de rotation.

2. Dispositif d'exploration selon la revendication 1, caractérisé en ce que la partie de base sert directement de butée au dispositif de réglage agissant sur la partie de retenue.

3. Dispositif d'exploration selon la revendication 1 ou 2, caractérisé en ce que la partie de retenue et la partie de base présentent l'une au moins une surface d'attaque et l'autre au moins une surface d'appui pour au moins un autre dispositif de réglage servant à régler la partie de retenue par rapport à la partie de base dans au moins un sens s'étendant dans le plan de la partie de retenue.

4. Dispositif d'exploration selon la revendication 3, caractérisé en ce que la partie de retenue et la partie de base présentent l'une deux surfaces d'attaque sensiblement opposées et l'autre deux surfaces d'appui sensiblement opposées pour au moins un autre dispositif de réglage servant à régler la partie de retenue par rapport à la partie de base dans les sens qui, dans le plan de la partie de retenue, s'étendent perpendiculairement à la ligne radiale.

5. Dispositif d'exploration selon la revendication 3, caractérisé en ce que la partie de retenue et la partie de base présentent l'une deux autres surfaces d'attaque sensiblement opposées et l'autre deux autres surfaces d'appui sensiblement opposées pour au moins un autre dispositif de réglage servant à régler la partie de retenue par rapport à la partie de base dans les sens qui, dans le plan de la partie de retenue, coïncident avec la ligne radiale.

6. Dispositif d'exploration selon l'une des revendications 3 à 5, caractérisé en ce que la partie de retenue et la partie de base présentent chacune une ouverture s'étendant de part en part, ouvertures qui dans le sens de l'axe de rotation, présentent des parois de séparation sensiblement concentriques et dans lesquelles peut être introduit, dans le sens de l'axe de rotation, un outil de réglage en forme de broche servant d'autre dispositif de réglage et pouvant être tourné à la main pour régler la partie de retenue par rapport à la partie de base dans au moins un sens s'étendant dans le plan de la partie de retenue, outil de réglage qui au cours de son pivotement, attaque une surface d'attaque formée par une portion de paroi de l'ouverture dans la partie de retenue et prend appui sur une surface de butée formée par une portion de paroi de l'ouverture dans la partie de base.

7. Dispositif d'exploration selon l'une des revendications 3 à 6, caractérisé en ce que l'organe de liaison est réalisé à déformation plastique dans la zone de réglage de la partie de retenue par rapport à la partie de base dans au moins un sens s'étendant dans le plan de la partie de retenue.

8. Dispositif d'exploration selon l'une des revendications 1 à 7, caractérisé en ce qu'il est prévu deux organes de liaison qui, dans le sens de l'axe de pliage, sont disposés à distance l'un de l'autre et symétriquement par rapport à la ligne radiale.

Fig.1

Fig.2

Fig.3

Fig.4

Fig.5

Fig.6